# EUROPEAN PATENT APPLICATION

(11) **EP 4 170 579 A1**
(43) Date of publication of application: **26.04.2023**
(21) Application number: 21290068.2
(22) Date of filing: 22.10.2021
(51) Int. Cl.: G06T 3/00, G06T 11/00, G06T 5/50

(54) **IMAGE PROCESSING DEVICE, MEDICAL IMAGING SYSTEM AND COMPUTER PROGRAM ELEMENT**

(71) Applicant: Koninklijke Philips N.V., 5656 AG Eindhoven (NL)
(72) Inventor: Wiemker, Rafael, 5656 Ae Eindhoven (NL); Nickisch, Hannes, 5656 Ae Eindhoven (NL); Peters, Jochen, 5656 Ae Eindhoven (NL); Schmitt, Holger, 5656 Ae Eindhoven (NL); Vlachomitrou, Anna Sesilia, 5656 Ae Eindhoven (NL)
(74) Representative: Philips Intellectual Property & Standards

(57) **Abstract**

The invention relates to an image processing device (3) comprising a data input unit (4) for receiving volumetric medical image data (7) organized in voxels and processing unit (5). The processing unit (5) adapted to perform an automatic anatomical shape model segmentation (8) on the volumetric medical image data (7). It is further adapted to perform a determination of a first layer of interest (9) and of a second layer of interest (11). A first projection (10) of the first layer of interest (9) is performed, yielding perfusion information data, and a second projection (14) of the second layer of interest (11) is performed, yielding vascular information data. Finally, a graphical combination (15) of the perfusion information data and the vascular information data is performed, yielding combined information data (21). The invention further relates to a medical imaging system (1) comprising an image processing device (3) and to a computer program element.

## Description

### FIELD OF THE INVENTION

The invention relates to an image processing device, to a medical imaging system and to a computer program element.

### BACKGROUND OF THE INVENTION

Volumetric medical images that have been obtained from, e.g., computed tomography, magnetic resonance imaging or ultrasound, provide various medical applications. As an example, vasculature and possible defects in said vasculature may be detected using volumetric medical images. As another example, perfusion, e.g., of a muscular tissue, may be assessed using volumetric medical images.

Since a defect in the vasculature may be the root cause for a low perfusion, both the vasculature and the perfusion of an organ, e.g., a heart, have to be consulted to obtain a complete picture.

However, standard visualization techniques, such as a maximum intensity projection or a mean intensity projection, may not be able to yield an uncluttered view on the septum between the left and right cardiac ventricle. On the other hand, explicit vascular segmentations have additional sources of segmentation errors as well as registration errors with the muscular segmentation.

### SUMMARY OF THE INVENTION

It is an object of the present invention to provide an image processing device that provides improved information on perfusion as well as on vasculature. It is a further object of the present invention to provide a medical imaging system with said image processing device and a computer program element that performs the image processing of said image processing device.

In an aspect of the present invention, an image processing device is provided. The image processing device comprises a data input unit and a processing unit.

The data input unit is configured for receiving volumetric medical image data organized in voxels. Said volumetric medical image data may have been obtained by a variety of three-dimensional medical imaging methods. The data input unit may be a network connection unit that is adapted to receive the volumetric medical image data from a medical imaging device. Alternatively, the data input unit may be a physical or virtual interface for transferring volumetric medical image data from a generating unit that generated said volumetric medical image data from raw sensor data to the. processing unit.

The processing unit receives the volumetric medical image data from the data input unit and is adapted to perform the following steps on the received volumetric medical image data. These steps may all be performed on one processor but may also be distributed over several processors.

First, an automatic anatomical shape model segmentation is performed. This yields a labeling of the anatomical structures that are present in the volumetric medical image data or a labeling of at least those anatomical structures that are of interest for the present image processing. Said automatic anatomical shape model segmentation may be performed by a trained machine learning system such as a deep neural network or a decision tree.

Based on the anatomical shape model segmentation, a determination of a first layer of interest is performed. Said first layer of interest is a layer, in particular a curvilinear layer and/or a manifold with a finite thickness, for which perfusion information is needed. Here, perfusion may refer to the perfusion with blood but may as well refer to the perfusion with other body fluids. In particular, the first layer of interest may be following the surface of an anatomical object of interest.

Based on the anatomical shape model segmentation, also a determination of a second layer of interest is performed. Said second layer of interest is a layer, in particular a curvilinear layer and/or a manifold with a finite thickness, for which vascular information is needed. Here, vasculature may refer to blood vessels but may as well refer to vessels conveying other body fluids. In particular, vasculature refers to the vessels conveying the body fluid that corresponds to the perfusion in the first layer of interest. The second layer of interest may also be following the surface of the anatomical object of interest. In particular, the second layer of interest is locally parallel to the first layer of interest.

Further, a first projection of the first layer of interest is performed, yielding perfusion information data. In particular, said first projection provides a concise information on the uptake of a contrast agent in the perfused tissue, wherein the contrast agent uptake is a surrogate for the perfusion itself.

Also, a second projection of the second layer of interest is performed, yielding vascular information data. In particular, said second projection is sensitive to the vasculature feeding the tissue of which the perfusion has been determined by the first projection.

Finally, a graphical combination of the perfusion information data and the vascular information data is performed, yielding combined information data. Said graphical combination may be performed in a variety of ways. The visualization of the combined information data is beneficial for an intuitive simultaneous appraisal of perfusion defects in context with the patient-specific vasculature and in particular vascular defects, wherein the defects in the feeding vasculature may be the root cause for the perfusion defects. The combined graphical information allows the assessment of the actionability and treatability of possible perfusion deficits and vascular stenoses. Further, computational costs may be saved by combining the perfusion analysis and the vasculature analysis and error sources from an explicit segmentation and registration of vasculature are avoided.

The combined information data may be presented as an image. The image may show a two-dimensional projection of a three-dimensional rendering of the first and/or second layer of interest, wherein the surface of the first and/or second layer of interest is colored according to the combined information data. Alternatively or additionally, the image may show a two-dimensional projection of the complete first and/or second layer of interest, in particular in a type of world map projection or, particularly for a ventricle, in a bulls-eye view. Further, navigational components may be provided to a user, e.g., to select the center of the current view, to zoom in or zoom out.

According to an embodiment, the volumetric medical image data is computed tomography data, magnetic resonance data and/or ultrasound data. In general, any volumetric medical imaging method for which perfusion manifests itself by virtue of contrast agent uptake may be used. A preferable volumetric medical image data is spectral computed tomography (spectral CT) data, since spectral CT features superior contrast agent sensitivity, and is thus beneficial for functional assessment of perfused tissue and its feeding vasculature. Spectral CT has the particular benefit that differentiation is possible between high densities from calcifications versus contrast agent, which in many cases is iodine, in particular in the vasculature. Contrast agent uptake in perfused tissue can serve as a surrogate for perfusion, even though small tissue-embedded vessels have calibers below a spatial resolution limit of the spectral CT system. In particular, the spectral properties of interest, e.g., iodine concentration, are different in significance as well as in dynamic scale for perfused tissue versus vasculature.

According to an embodiment, the volumetric medical image data comprises at least a part of an organ, in particular an organ where feeding vasculature and perfused tissue are linked and/or organs which have outer anatomical layers of special interest. Said special interest may be because of special functionality, or because for interventions they are the first shell to become visible to an operator who often uses surface vasculature as a landmark for visual orientation or to be intruded by a surgical instrument. One such organ is a heart. For the heart, the body fluid is blood, perfusion refers to myocardial perfusion and the vasculature refers to the coronary vessels. Another such organ is a kidney, where the body fluid is urine. Yet another such organ is a mamma, where the body fluid is milk. Yet other such organs are a lung, a liver or a brain.

According to an embodiment, the automatic anatomical shape model segmentation yields a mesh model or a label volume. The mesh model provides a surface surrounding the anatomical object of interest, whereas the label volume provides the entire volume of the anatomical object of interest. In the latter case, constructing the surface surrounding the anatomical object of interest is straight forward. In particular, the first layer of interest and/or the second layer of interest are close the to the surface of the anatomical object of interest. For the heart, the automatic anatomical shape model segmentation preferably yields surfaces defining a myocardium surrounding the left and/or right cardiac ventricle.

According to an embodiment, the first layer of interest is an endo-mural layer of the organ. The perfusion of the endo-mural layers of the organ is most affected by the vasculature surrounding the organ. For the heart, the first layer of interest is in particular between an endo-cardiac wall and an epi-cardiac wall, hence the first layer of interest comprises the myocardium. With such a choice of first layer of interest, the perfusion information data is robust against imperfections of the spatial delineation of the first layer of interest.

According to an embodiment, the first projection is an average intensity projection. Said average may be taken in a variety of ways. As an example, the average intensity projection may be a mean intensity projection. As another example, the average intensity projection may be a median intensity projection, wherein the latter provides an especially robust determination of the perfusion.

According to an embodiment, the processing unit is further adapted to perform a dynamic auto-leveling of a perfusion scale corresponding to the perfusion information data. In particular, the center of a scale pertaining to the perfusion information data, the so-called level, may be automatically set, e.g., to the median of all contrast agent density values within the first layer of interest and the so-called window may be set to a quantile of the distribution of the contrast agent density values within the first layer of interest. Said auto-leveling provides an automatic adjustment to patient- and/or exam-specific contrast agent concentration levels.

According to an embodiment, the second layer of interest is a trans-mural layer of the organ. Said trans-mural layer is particularly sensitive for delicate anatomical structures.

According to an embodiment, the second layer of interest is directly adjacent to the first layer of interest. Here, directly adjacent refers to a direction normal to the extension of the first layer of interest. In particular, the outer surface of the first layer of interest coincides with the inner surface of the second layer of interest. For a three-dimensional representation of the combined information data, said middle surface between the first layer of interest and the second layer of interest may be used to carry the color information. Alternatively, the second layer of interest may be located at a distance from the first layer of interest. Said distance is measured along the direction normal to the extension of the first layer of interest and may be a constant or varying depending on details of the anatomical structure. In some embodiments, it is even possible that the first layer of interest and the second layer of interest overlap, i.e., that the distance is negative.

According to an embodiment, the processing unit is further adapted to perform a restriction of the second layer of interest to avoid overlap with other anatomical entities. Said restriction may be performed, e.g., based on density thresholds, based on a covariance measure and/or based on a connectedness measure. With said restriction, false information arising from the inclusion of other anatomical entities within the second layer of interest is suppressed. In particular, for the heart, said other anatomical entity is the lung.

According to an embodiment, the processing unit is further adapted to perform an application of vesselness-weighting to the second layer of interest. Vesselness-weighting enhances tubular structures and is therefore beneficial for recognizing the vasculature in the second layer of interest. Also, vesselness-weighting suppresses false information stemming from the inclusion of other anatomical entities in the second layer of interest. In particular, for the right cardiac ventricle, false information stemming from the inclusion of parts of the left cardiac ventricle in the second layer of interest are suppressed, and vice versa. The vesselness-weighting may be implemented using a vesselness filter, e.g., by eigenvalues of the Hessian matrix which comprises second derivatives, or by eigenvalues of the structure tensor which comprises first derivatives.

According to an embodiment, the processing unit is further adapted to perform a dynamic range adjustment of the vesselness scale. Said dynamic range adjustment may be performed by adjusting the scale of the vesselness weighting to a quantile of the value distribution within the second layer of interest. The dynamic range adjustment of the vesselness scale is in particular useful for dealing with exam-specific noise levels of the volumetric medical image data.

According to an embodiment, the second projection is a maximum intensity projection. Hence, even small vessels will be recognized and included in the vascular information data and then in the combined information data.

According to an embodiment, the graphical combination comprises mapping of the perfusion information data and the vascular information data to pseudo color scales and arranging the vascular information data superimposed over the perfusion information data. In particular, independent color scales are used for the perfusion information data and the vascular information data, respectively. In particular, the vasculature may be displayed in a color that is not in the range of colors used to represent the perfusion. As an example, the perfusion information data may be displayed in green to blue colors, depending on the perfusion, whereas the vasculature is displayed in white, black or red. This makes the vasculature stand out in front of the perfusion information data.

In another aspect of the present invention, a medical imaging system, in particular a spectral computed tomography system, is provided. Said medical imaging system comprises an image processing device according to the above description. In particular, the medical imaging system is adapted to provide combined information data, comprising perfusion information data and vascular information data. Hence, using the combined information data, defects of the perfusion may be easily linked to defects of the vasculature that may be the root cause for the defects in the perfusion. Further advantages are given in the above description.

In yet another aspect of the present invention, a computer program element is provided. The computer program element, when executed by at least one processing unit, is adapted to cause the processing unit to perform an automatic anatomical shape model segmentation on volumetric medical image data, a determination of a first layer of interest and a determination of a second layer of interest. The computer program element is further adapted to cause the processing unit to perform a first projection of the first layer of interest yielding perfusion information data, a second projection of the second layer of interest yielding vascular information data and a graphical combination of the perfusion information data and the vascular information data, yielding combined information data. Using the combined information data, defects of the perfusion may be easily linked to defects of the vasculature that may be the root cause for the defects in the perfusion. Further advantages are given in the above description.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Fig. 1 shows a schematic overview of an embodiment of a medical imaging system;
Fig. 2 shows a flowchart of an embodiment of an image processing method;
Fig. 3a shows a volumetric image of a heart;
Fig. 3b shows another volumetric image of a heart; and
Fig. 4 shows various presentations of combined information data.

### DETAILED DESCRIPTION OF EMBODIMENTS

Like numbered elements in these figures are either equivalent elements or perform the same function. Elements which have been discussed previously will not necessarily be discussed in later figures if the function is equivalent.

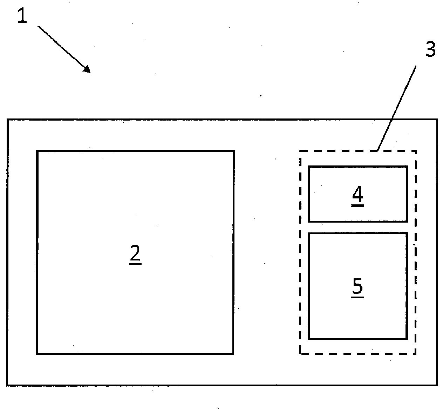

Fig. 1 shows a schematic overview of an embodiment of a medical imaging system 1. The medical imaging system 1 comprises a medical imaging device 2 and an image processing device 3. The medical imaging device 2 is adapted to generate volumetric medical image data organized in voxels and may be a computed tomography (CT) device, a spectral CT device, an MR device or an ultrasound device. The volumetric medical image data is then received by a data input unit 4 of the image processing device 3. The data input unit 4 is adapted to transfer the received volumetric medical image data to a processing unit 5 of the image processing device 3.

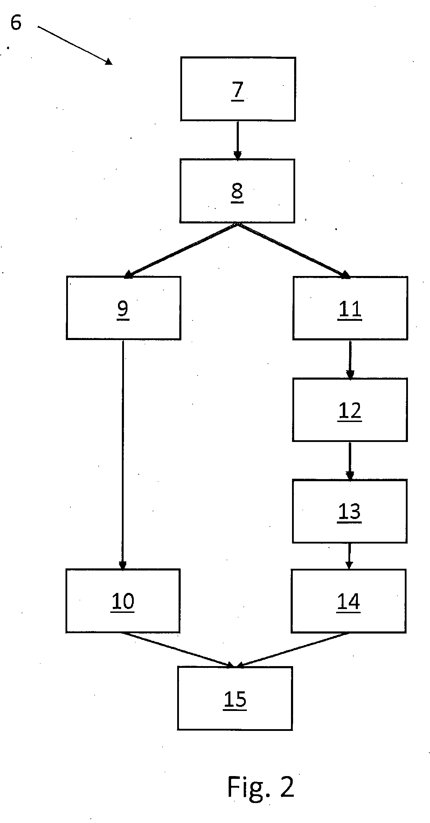

The processing unit 5 is adapted to perform the method 6 shown in Fig. 2. Said method 6 starts with the volumetric medical image data 7 of the medical imaging device 2. An automatic anatomical shape model segmentation 8 is performed on the volumetric medical image data 7. This yields a mesh model or a label volume representing the anatomical structures, in particular organs, that are of interest in the volumetric medical image data 7.

Based on the anatomical shape model segmentation 8, a first layer of interest 9 is determined. Said first layer of interest 9 is in particular an endo-mural layer of the organ and is a layer for which perfusion with body fluids is to be assessed. As an example, for the heart, the body fluid is blood and the first layer of interest is between an endo-cardiac wall and an epi-cardiac wall. A first projection 10 is then performed on the first layer of interest 9, yielding perfusion information data. The first projection 10 may, in particular, be an average intensity projection such as a median intensity projection or a mean intensity projection.

Further, a second layer of interest 11 is determined based on the anatomical shape model segmentation 8. Said second layer of interest 11 is in particular a trans-mural layer of the organ and is directly adjacent to the first layer of interest 9. The second layer of interest 11 is a layer for which vasculature is to be assessed. Optionally, a restriction 12 of the second layer of interest 11 is performed to avoid overlap with other anatomical entities. As an example, for the heart, such restriction 12 is performed to avoid overlap with the lung area. Optionally, vesselness-weighting 13 is applied to the second layer of interest 11. Said vesselness-weighting 13 enhances the vessels which is what is to be seen in the second layer of interest 11. Also, vesselness-weighting 13 may reduce the influence of other anatomical entities on the second layer of interest 11. As an example, if the right ventricle of the heart is examined, vesselness-weighting 13 reduces the influence of the left ventricle of the heart. Then, a second projection 14 is performed on the second layer of interest 11, yielding vascular information data. The second projection 14 is in particular a maximum intensity projection, such that even smaller vessels may be assessed.

Finally, a graphical combination 15 of the perfusion information data and the vascular information data is performed, yielding combined information data. Said graphical combination 15 is in particular performed such that the vascular information data is visible superimposed over the perfusion information data. The visualization of the combined information data is beneficial for an intuitive simultaneous appraisal of perfusion defects in context with the patient-specific vasculature and in particular vascular defects, wherein the defects in the feeding vasculature may be the root cause for the perfusion defects. The combined graphical information allows the assessment of the actionability and treatability of possible perfusion deficits and vascular stenoses. Further, computational costs may be saved by combining the perfusion analysis and the vasculature analysis and error sources from an explicit segmentation and registration of vasculature are avoided.

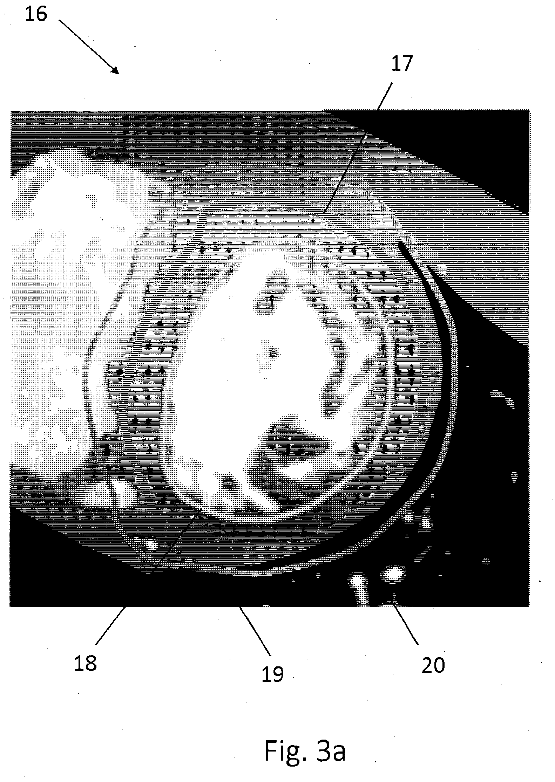

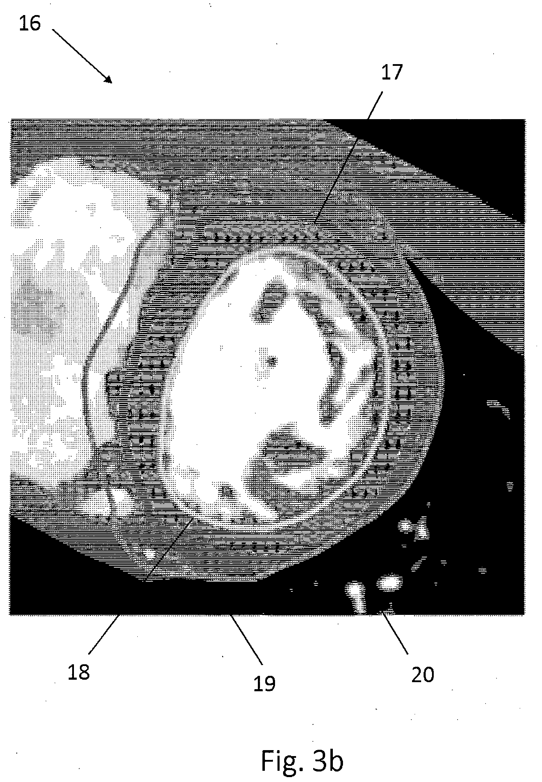

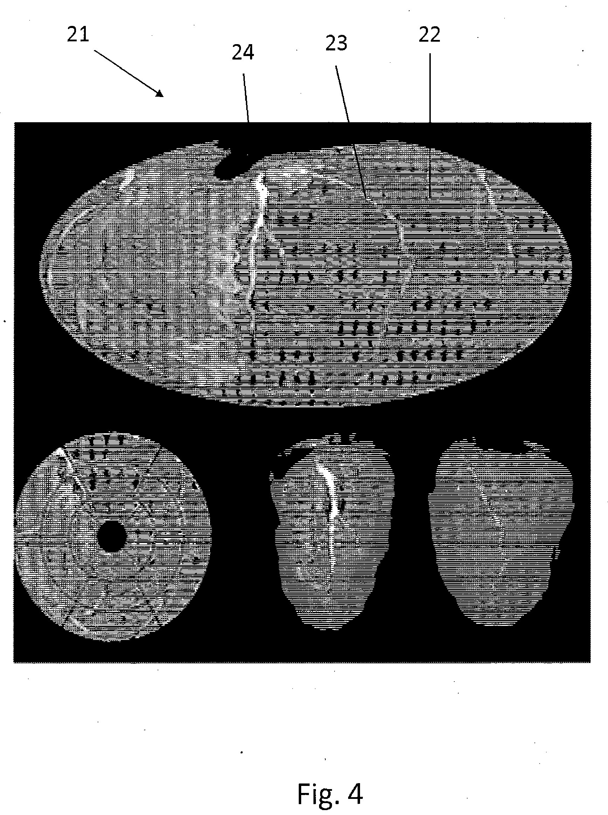

As an example, images of a heart 16 are shown in Figs. 3a, 3b and 4. Fig. 3a shows a cross-section of volumetric medical image data 7 as obtained by spectral CT. The epi-cardiac wall 17 of the heart 16 has been identified by an automatic anatomical shape model segmentation 8. In the cross-sectional area, the epi-cardiac wall 17 is a line surrounding the myocardium. Also shown in the cross-sectional area is the endo-cardiac wall 18, being the inner limitation of the myocardium. The first layer of interest 9 extends between the endo-cardiac wall 18 and the epi-cardiac wall 17. For said first layer of interest 9, perfusion is assessed.

Also shown in the cross-section area is an outer surface 19, being arranged in a predetermined distance around the epi-cardiac wall 17. The second layer of interest 11 extends between the epi-cardiac wall 17 and the outer surface 19. Within said second layer of interest 11, the vasculature, in particular the coronary vessels, are assessed.

As can be seen from Fig. 3a, a part of a lung area 20 extends into the second layer of interest 11 on the lower right side. This part of the lung area 20 would lead to false information in the second projection. Hence, a restriction 12 has been applied to the second layer of interest 11, as can be seen in Fig. 3b. For the restriction, the lung area 20 may be identified, e.g., by very low Hounsfield densities. The restricted second layer of interest 11 no longer contains the part of the lung area such that a better assessment of the vasculature in that region is possible.

Finally, Fig. 4 shows several presentations of the combined information data 21. In all three representations, different gray levels correspond to different levels of perfusion 22 in the first layer of interest 9 whereas the vasculature 23 is shown in white. Effects of the ventricular septum 24 may be seen at the "north pole", i.e., at the top in the upper and lower right representations as well as in the center in the lower left representation.

The upper representation is a world map view, wherein many different projections may be used. In particular, equal-area projections are advantageous since they show the correct size of perfusion defects.

The lower left representation is a bull's eye view of the 17-segment AHA model. In this representation, the ventricular septum 24 is arranged in the center.

Finally, the lower right representation shows the combined information data 21 mapped on the epi-cardiac wall 17. This representation comprises two images, one showing a front view, the other showing a rear view of the heart.

In particular, providing several different representations of the combined information data 21 helps identifying perfusion defects and defects in the vasculature.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

### LIST OF REFERENCE SIGNS:

- 1: medical imaging system
- 2: medical imaging device
- 3: image processing device
- 4: data input unit
- 5: processing unit
- 6: method
- 7: volumetric medical image data
- 8: anatomical shape model segmentation
- 9: first layer of interest
- 10: first projection
- 11: second layer of interest
- 12: restriction
- 13: vesselness-weighting
- 14: second projection
- 15: graphical combination
- 16: heart
- 17: epi-cardiac wall
- 18: endo-cardiac wall
- 19: outer surface
- 20: lung area
- 21: combined information data
- 22: perfusion
- 23: vasculature
- 24: ventricular septum

## Claims

1. An image processing device comprising:
a data input unit (4) for receiving volumetric medical image data (7) organized in voxels;
a processing unit (5) adapted to perform on the volumetric medical image data (7):
an automatic anatomical shape model segmentation (8);
a determination of a first layer of interest (9);
a determination of a second layer of interest (11);
a first projection (10) of the first layer of interest (9) yielding perfusion information data;
a second projection (14) of the second layer of interest (11) yielding vascular information data; and
a graphical combination (15) of the perfusion information data and the vascular information data, yielding combined information data (21).

2. The image processing device according to claim 1, wherein the volumetric medical image data (7) is computed tomography data, in particular spectral computed tomography data, magnetic resonance data and/or ultrasound data.

3. The image processing device according to claim 1 or 2, wherein the volumetric medical image data (7) comprises at least a part of an organ, in particular a heart (16), a liver, a kidney, a mamma, a lung or a brain.

4. The image processing device according to any of claims 1 to 3, wherein the automatic anatomical shape model segmentation (8) yields a mesh model or a label volume.

5. The image processing device according to claim 3 or 4, wherein the first layer of interest (9) is an endo-mural layer of the organ, in particular between an endo-cardiac wall (18) and an epi-cardiac wall (17).

6. The image processing device according to any of claims 1 to 5, wherein the first projection (10) is an average intensity projection, in particular a median intensity projection or a mean intensity projection.

7. The image processing device according to any of claims 1 to 6, wherein the processing unit (5) is further adapted to perform a dynamic auto-leveling of a perfusion scale corresponding to the perfusion information data.

8. The image processing device according to any of claims 1 to 7, wherein the second layer of interest (11) is a trans-mural layer of the organ, is directly adjacent to the first layer of interest (9) and/or is located at a distance from the first layer of interest (9).

9. The image processing device according to any of claims 1 to 8, wherein the processing unit (5) is further adapted to perform a restriction (12) of the second layer of interest (11) to avoid overlap with other anatomical entities, in particular the lung area (20).

10. The image processing device according to any of claims 1 to 9, wherein the processing unit (5) is further adapted to perform an application ofvesselness-weighting (13) to the second layer of interest (11).

11. The image processing device according to claim 10, wherein the processing unit (5) is further adapted to perform a dynamic range adjustment of the vesselness scale.

12. The image processing device according to any of claims 1 to 11, wherein the second projection (14) is a maximum intensity projection.

13. The image processing device according to any of claims 1 to 12 , wherein the graphical combination (15) comprises mapping of the perfusion information data and the vascular information data to pseudo color scales arid arranging the vascular information data superimposed over the perfusion information data.

14. A medical imaging system, in particular a spectral computed tomography system, comprising an image processing device (3) according to any of claims 1 to 13.

15. A computer program element, which, when executed by at least one processing unit (5), is adapted to cause the processing unit (5) to perform on volumetric medical image data (7):
an automatic anatomical shape model segmentation (8);
a determination of a first layer of interest (9);
a determination of a second layer of interest (11);
a first projection (10) of the first layer of interest (9) yielding perfusion information data;
a second projection (14) of the second layer of interest (11) yielding vascular information data; and
a graphical combination (15) of the perfusion information data and the vascular information data, yielding combined information data (21).
